(19) Europäisches Patentamt
European Patent Office
Office européen des brevets

(11) EP 2 376 963 B1

(12) EUROPÄISCHE PATENTSCHRIFT

(45) Veröffentlichungstag und Bekanntmachung des Hinweises auf die Patenterteilung:
**21.11.2012 Patentblatt 2012/47**

(51) Int Cl.:
*G02B 13/22* *(2006.01)*      *G02B 15/173* *(2006.01)*
*G02B 15/28* *(2006.01)*

(21) Anmeldenummer: **10700491.3**

(22) Anmeldetag: **12.01.2010**

(86) Internationale Anmeldenummer:
**PCT/EP2010/000095**

(87) Internationale Veröffentlichungsnummer:
**WO 2010/081669 (22.07.2010 Gazette 2010/29)**

(54) **BEIDSEITIG TELEZENTRISCHES VERGRÖSSERUNGSSYSTEM**

MAGNIFYING SYSTEM WHICH IS TELECENTRIC ON BOTH SIDES

SYSTÈME DE GROSSISSEMENT BILATÉRALEMENT TÉLÉCENTRIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.01.2009 DE 102009004348**

(43) Veröffentlichungstag der Anmeldung:
**19.10.2011 Patentblatt 2011/42**

(73) Patentinhaber: **Carl Zeiss Microscopy GmbH**
**07745 Jena (DE)**

(72) Erfinder:
• **WINTEROT, Johannes**
**07745 Jena (DE)**
• **SPRENGER, Joerg**
**37085 Göttingen (DE)**
• **KNOBLICH, Johannes**
**07747 Jena (DE)**

(74) Vertreter: **Geyer, Fehners & Partner**
**Patentanwälte**
**Sellierstrasse 1**
**07745 Jena (DE)**

(56) Entgegenhaltungen:
**JP-A- 9 184 978          JP-A- 9 184 980**
**JP-A- 2005 316 143      US-A- 5 805 347**
**US-A1- 2005 041 304**

EP 2 376 963 B1

**Beschreibung**

Die Erfindung bezieht sich auf ein beidseitig telezentrisches Vergrößerungssystem, bestehend aus einem objektseitigen und einem bildseitigen optischen Teilsystem, in denen jeweils mindestens eine Linsengruppe zwecks Variation der Brennweite entlang der optischen Achse verschiebbar ist, während die Übertragungslänge von der Objektebene bis zur Bildebene konstant bleibt. Die Erfindung bezieht sich weiterhin auf beidseitig telezentrische Vergrößerungssysteme mit fester, unveränderlicher Vergrößerung.

Im Stand der Technik sind beidseitig telezentrische Vergrößerungssysteme bekannt, bei denen das Verhältnis zwischen maximaler und minimaler Vergrößerung, auch als Spreizung bezeichnet, gering ist. So ist in JP 2005316143 ein Vergrößerungssystem dieser Art mit einer Spreizung von 1,77 beschrieben. Diese Spreizung ist für viele Anwendungsfälle nicht ausreichend.

Größere Spreizungen sind schwierig zu realisieren, weil ausgehend von einem Endlich-Endlich-System mit festem Abbildungsmaßstab für ein beidseitig telezentrisches System die Aperturbegrenzung im Objekt- und Bildraum jeweils nach Unendlich abgebildet werden muß. Soll ein Zoomsystem ebenfalls einen beidseitig telezentrischen Strahlengang besitzen, so muß auch hier die Abbildung der in der jeweiligen Zoomstellung wirkenden Aperturbegrenzung nach Unendlich erfolgen.

In dem telezentrisch abbildenden System mit veränderlicher Vergrößerung nach DE 3 887 578 beispielsweise erfolgt diese Begrenzung über den Zoombereich hinweg an verschiedenen Linsendurchmessern. Der Nachteil hierbei liegt in der nur unzureichenden Aufrechterhaltung der beidseitigen Telezentrie aufgrund der unterschiedlichen Vignettierung bezüglich Feldgröße und Zoomstellung. Hieraus ergeben sich sowohl eingeschränkte Zoombereiche als auch für die Fertigung der Systeme ein erhöhter Justieraufwand für die Sicherstellung der Telezentrie.

Objektseitige Telezentrie eines Systems tritt ein, wenn sein bildseitiger Brennpunkt mit der Öffnungsblende oder einem ihrer Bilder zusammenfällt. Analog gilt: Bildseitige Telezentrie eines Systems tritt ein, wenn sein objektseitiger Brennpunkt mit der Öffnungsblende oder einem ihrer Bilder zusammenfällt. Zerlegt man ein System, das die Eigenschaft der beidseitigen Telezentrie erfüllt, an seiner Öffnungsblende, so erhält man ein System mit zumindest objektseitiger Telezentrie und einem zweiten System mit zumindest bildseitiger Telezentrie. Die Summe der Längen der beiden Teilsysteme ergibt die Übertragungslänge von Objekt bis Bild.

Ein einfaches beidseitig telezentrisches System ist konstruierbar aus einem objektseitig telezentrischen Teilsystem und einem bildseitig telezentrischen Teilsystem mit zusammenfallenden Öffnungsblenden. Wird hinter ein objektseitig telezentrisches Teilsystem ein System endlicher Übertragungslänge (auch als Relaysystem bezeichnet) gestellt, und zwar derart, daß es dessen bildseitigen Brennpunkt in den objektseitigen Brennpunkt des bildseitig telezentrischen Teilsystems abbildet, entsteht ein zusammengesetztes beidseitig telezentrisches System.

Dieses Einfügen eines Relaysystems läßt sich wiederholen. Entsprechend ergibt sich die Übertragungslänge als Summe der Längen der beiden Teilsysteme plus der Summe der Längen aller Relaysysteme. Hierbei handelt es sich allerdings noch nicht um ein Zoomsystem.

Bei Zoomsystemen sind einzelne Komponenten entlang der optischen Achse beweglich, wobei eine Änderung des Abbildungsmaßstabes bei beibehaltener beidseitiger Telezentrie und konstanter Entfernung von Objekt zu Bild eintritt.

Bekannte Zoomsysteme sind überwiegend als Mittenblendensysteme ausgelegt. Allein durch Kombination solcher Systeme ist es nicht möglich, ein einfaches beidseitig telezentrisches Zoomsystem konstanter Übertragungslänge im Sinne der vorliegenden Erfindung abzuleiten. Deren Auslegung erfordert die gleichzeitige Kontrolle von Fokussierung, Übertragungslänge und Übereinstimmung der Brennpunktlagen der Teilsysteme.

Ein weiterer Nachteil des bereits genannten Vergrößerungssystems nach JP 2005316143 besteht darin, daß die telezentrische Funktion nicht durch optische Baugruppen erzielt wird, die innerhalb des Vergrößerungssystems liegen, sondern durch vor- oder nachgeordnete Baugruppen definiert werden muß, wie beispielsweise Linsengruppen mit zugeordneten Blenden.

Das hat zur Folge, daß dieses System nicht gesondert, sondern nur in Verbindung mit den bündelformenden Systemen als beidseitig telezentrisches System eingesetzt werden kann. Das schließt seinen Einsatz für eine Vielzahl von Abbildungsaufgaben aus.

Von der Gesamtanzahl der Linsengruppen, aus denen dieses Vergrößerungssystem besteht, sind zwecks Variation der Vergrößerung drei Linsengruppen verschiebbar. Nachteilig ist dabei, daß eine der verschiebbaren Linsengruppen über den Ort der Öffnungsblende hinweg verschoben werden muß, um den möglichen Vergrößerungsbereich auszunutzen. Soll die Bündelformung über eine systemeigene Blende erfolgen, so ist dieser Ort nicht erreichbar und der Zoombereich weist Unterbrechungen auf.

Davon ausgehend liegt der Erfindung die Aufgabe zugrunde, ein beidseitig telezentrisch Vergrößerungssystem zu schaffen, das eine im Vergleich zu bekannten Vergrößerungssystemen höhere Spreizung aufweist und zugleich die weiteren vorbeschriebenen Mängel des Standes der Technik behebt.

Diese Aufgabe wird gelöst mit einem Vergrößerungssystem konstanter endlicher Übertragungslänge mit den Merkmalen des Anspruchs 1, bei dem im Unterschied zum Stand der Technik der bildseitige Brennpunkt eines objektseitigen Teilsystems mit dem objektseitigen Brennpunkt eines bildseitigen Teilsystems in einem gemeinsamen Ort zusammenfällt und dieser Ort über den gesamten Zoombereich in genau einem Luftraum zwischen zwei Linsengruppen liegt.

Ein ganz wesentlicher Vorteil des erfindungsgemäßen beidseitigen telezentrischen Vergrößerungssystems besteht darin, daß dieser Ort, an dem die Brennpunkte zusammenfallen, außerhalb von optischen Bauelementen angeordnet ist und über den gesamten genutzten Zoombereich hinweg im selben Luftraum liegt. Dadurch ist an dieser Stelle eine Bündelformung mit einer mechanischen Blende möglich, die eine beidseitige Telezentrie realisiert. Eine demgegenüber nachteilige Bündelformung in vor- oder nachgelagerten Systemen, wie im Stand der Technik üblich, ist nicht erforderlich.

Bei der Ausführung des erfindungsgemäßen Vergrößerungssystems mit veränderlicher Vergrößerung ist im objektseitigen und im bildseitigen optischen Teilsystem jeweils mindestens eine Linsengruppe zwecks Variation der Brennweite entlang der optischen Achse verschiebbar, wobei mit der Verschiebung dieser Linsengruppe zwangsweise auch die Position des Brennpunktes angepaßt wird. Jedoch verbleibt der bildseitige Brennpunkt des objektseitigen Teilsystems während der Veränderung der Vergrößerung über den gesamten Vergrößerungsbereich hinweg stets zwischen einer Linsengruppe des ersten und einer Linsengruppe des zweiten Teilsystems auf dem objektseitigen Brennpunkt des bildseitigen Teilsystems, ohne daß Objekt und Bild zueinander ihren Abstand ändern.

Im Rahmen der Erfindung liegt es, wenn das erfindungsgemäße Vergrößerungssystem mit einer im Brennpunkt angeordneten körperlichen Blende ausgestattet ist, deren Blendenöffnung in Abhängigkeit von der Variation der Vergrößerung zwangsweise größer oder kleiner wird und insofern mit der Vergrößerung synchronisiert ist.

Handelt es sich um ein Zoomsystem in dem vor und hinter der Blende Linsengruppen verschoben werden, so kann exemplarisch für Systeme aus vier, fünf oder sechs Linsengruppen folgende Formeln für die Steuerkurve(n) angegeben werden: Für Systeme mit vier Linsengruppen:

$$\beta' = -\frac{t_1}{t_3}\frac{f_3}{f_1}\frac{f_4}{f_2} \quad \& \quad t_2 = \frac{f_2^2}{t_1} + \frac{f_3^2}{t_2}$$

Für Systeme mit fünf Linsengruppen, die nicht Teil der Erfindung sind, gelten die Beziehungen:

$$\beta' = \frac{t_1 t_2 - f_2^2}{t_4}\frac{f_4 f_5}{f_1 f_2 f_3} \quad \& \quad t_3 = \frac{f_3^2 t_1}{t_1 t_2 - f_2^2} + \frac{f_4^2}{t_4}$$

Zusätzlich lässt sich hierbei eine Nebenbedingung erfüllen, wie beispielsweise ein fester Abstand zwischen erster und letzter Linsengruppe nach der Funktion:

$$L = \sum_{i=1}^{5} d_i$$

Für Systeme mit sechs Linsengruppen, die nicht Teil der Erfindung sind, läßt sich die folgende Beziehung angeben:

$$\beta' = -\frac{f_4 f_5 f_6 f_2^2 - t_1 t_2}{f_1 f_2 f_3 f_5^2 - t_4 t_5} \& \, t_3 = \frac{f_3^2 t_1}{t_1 t_2 - f_2^2} + \frac{f_4^2 t_5}{t_4 t_5 - f_5^2}$$

In den vorgenannten Beziehungen gelten:

- $f_1, f_2 \ldots f_6$ als Brennweite der jeweiligen Linsengruppe,
- $t_1, t_2 \ldots t_5$ als die zu ermittelnden Brennpunktabstände, beispielsweise $t_1 = d_1 - f_1 - f_2$ und damit die durch die Steuerkurven verkörperten Luftabstände zwischen den Linsengruppen,
- $\beta'$ als Abbildungsmaßstabs des beidseitig telezentrischen Systems.

Die Güte der jeweils erzielten Telezentrie ist dabei stets abhängig von der Position des Brennpunktes bzw. der Blende und nicht von den Begrenzungen der gegebenenfalls vor- oder nachgeordneten optischen Baugruppen oder deren Positionen im Strahlengang.

Beispielsweise ist das erfindungsgemäße Vergrößerungssystem mit einer Übertragungslänge zwischen der Objektebene und der Bildebene im Bereich von 250 mm bis 600 mm ausgeführt. Das Vergrößerungssystem kann mit einer festen Vergrößerung innerhalb eines Bereiches zwischen dem -0,125-fachen und dem -1,875-fachen ausgeführt sein oder, alternativ dazu, mit variabler, dabei diesen Bereich insgesamt überdeckender Vergrößerung. Bei der Ausführung mit einer bestimmten festen Vergrößerung sind die äquivalenten Abstände zwischen den Linsengruppen als feste Abstände ausgeführt, wobei der Brennpunkt auch für alle ausgeführten festen Vergrößerungen im gleichen Luftraum zwischen zwei sich gegenüberstehenden Linsengruppen des ersten und zweiten Teilsystems liegt.

Die Bildgröße kann beispielsweise 8 mm betragen, die bildseitige Apertur beispielsweise mit >0,1 ausgeführt sein.

Das erfindungsgemäße Vergrößerungssystem ist sowohl in der Form eines separaten Vergrößerungsinstrumentes nutzbar, aber auch geeignet zur Verwendung in komplexen Beobachtungsgeräten sowie Prüf- oder Kontrollgeräten, darunter insbesondere zur Verwendung in telezentrischen Mikroskopsystemen.

Die Erfindung soll nachfolgend anhand eines Ausführungsbeispieles für ein beidseitig telezentrisches Vergrößerungssystem mit variabler Vergrößerung näher erläutert werden.

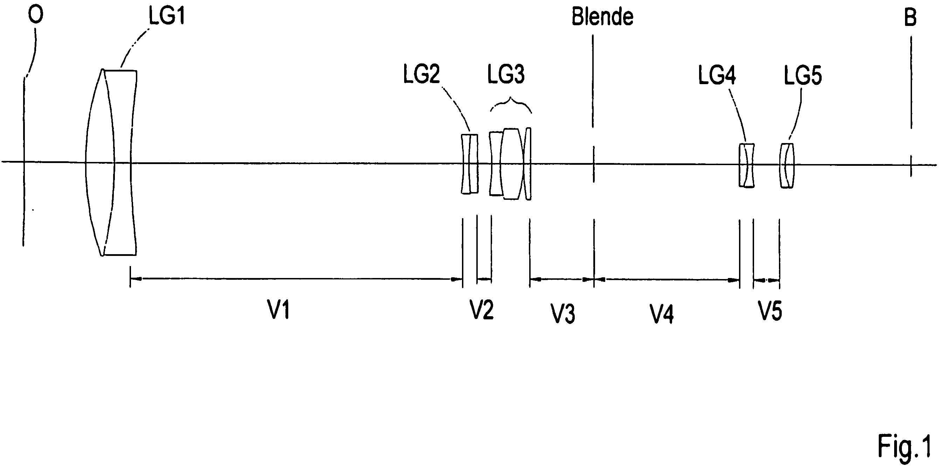

Fig.1 zeigt die optischen Baugruppen im Strahlengang eines solchen Vergrößerungssystems. Daraus sind die mit O bezeichnete Objektebene und die mit B bezeichnete Bildebene ersichtlich.

Das Vergrößerungssystem besteht objektseitig beginnend aus den Linsengruppen LG1 bis LG5. Dabei sind die Linsengruppen LG1 und LG5 mit festem Abstand zueinander sowie zur Objektebene O und zur Bildebene B positioniert, während die Linsengruppen LG2 bis LG4 in Richtung des Strahlengangs verschiebbar angeordnet sind.

Mit der Verschiebung der Linsengruppen LG2 bis LG4 werden die Abstände V1 bis V5 zwischen den Linsengruppen LG1 bis LG5 verändert, wobei die Vergrößerung variiert.

Die Linsengruppen LG1 bis LG3 befinden sich in einem ersten, objektseitigen Teilsystem des Vergrößerungssystems, die Linsengruppen LG4 und LG5 in einem zweiten, bildseitigen Teilsystem. Dabei fällt der bildseitige Brennpunkt der im ersten Teilsystem vorhandenen Linsengruppen LG1 bis LG3 mit dem objektseitigen Brennpunkt der Linsengruppen LG4 und LG5 des zweiten Teilsystems zusammen.

Das Vergrößerungssystem ist so ausgelegt, daß sich mit der Verschiebung der Linsengruppen LG2 bis LG4 zwangsläufig auch die Position des Brennpunktes ändert. Dabei verbleibt der Brennpunkt jedoch stets zwischen der Linsengruppe LG3 und der Linsengruppe LG4.

In dem hier gewählten Ausführungsbeispiel ist im Brennpunkt eine körperliche Blende vorgesehen, deren Blendenöffnung sich in Abhängigkeit von der Variation der Vergrößerung zwangsweise vergrößert oder verkleinert. Hiermit ist vorteilhaft eine Möglichkeit geschaffen, die Apertur zu ändern ohne die Telezentrie negativ zu beeinflussen oder Vignettierung im Feld zu erzeugen. Im Ausführungsbeispiel ist die Änderung der Größe der Öffnungsblende beispielhaft zur Gewährleistung einer konstanten bildseitigen Apertur ausgelegt.

Die Linsengruppen LG1, LG3 und LG5 sind mit positiver Brechkraft, die Linsengruppen LG2 und LG4 mit negativer Brechkraft ausgeführt.

Die funktionsrelevanten Daten des Vergrößerungssystems, explizit der Linsen L1 bis L11, der daraus gebildeten Linsengruppen LG1 bis LG5 sowie deren Abstände zueinander, sind der unten angefügten Tabelle 1 zu entnehmen. Die ebenfalls angefügte Tabelle 2 gibt Auskunft über die Abstände V1 bis V5 zwischen den Linsengruppen LG1 bis LG5 bei vorgegebenen Vergrößerungseinstellungen. Anspruch 9 enthält ohne Einschränkung des Schutzumfangs lediglich eine Auswahl aus Tabelle 2 von Vergrößerungseinstellungen und diesen Vergrößerungseinstellungen zugeordneten Abstände V1 bis V5.

Das erfindungsgemäße Vergrößerungssystem nach diesem Ausführungsbeispiel besitzt eine Übertragungslänge von 400 mm, eine Baulänge von 320 mm, eine Variationsmöglichkeit der Vergrößerung im Bereich des -0,125fachen bis -1,875fachen, eine Bildgröße von 8 mm und eine bildseitige Apertur von 0,05.

Alternativ zu der vorbeschriebenen Ausführung mit beispielsweise veränderlicher Vergrößerung kann das Vergrößerungssystem aus denselben Linsengruppen LG1 bis LG5 mit einer festen Vergrößerung ausgeführt sein. Dazu können der gewünschten Vergrößerung feste Abstände zwischen den Linsengruppen LG1 bis LG5 zugeordnet werden.

Eingeschlossen in die Erfindung sind ausdrücklich auch solche Systeme, die sich durch proportionale Abwandlung der Konstruktionsdaten ergeben.

Tabelle 1

| Bezeichnung | Linsengruppen | Radien r | Dicken d | Abstand a | Brechzahl $n_e$ | Abbezahl $v_e$ |
|---|---|---|---|---|---|---|
| Objekt | —— | | | 26,369 | | |
| L1 | | 93,85 | 12,000 | | 1,80832 | 46,24 |

(fortgesetzt)

| Bezeichnung | Linsengruppen | Radien r | Dicken d | Abstand a | Brechzahl $n_e$ | Abbezahl $v_e$ |
|---|---|---|---|---|---|---|
| L2 | LG1 | -127,26 | 7,000 | | 1,812659 | 25,15 |
| | —— | 202,36 | | | | |
| | | | | V1 | | |
| L3 | —— | -63,33 | 2,500 | | 1,48914 | 70,18 |
| L4 | LG2 | 114,37 | 3,500 | | 1,743412 | 32,04 |
| | —— | 237,09 | | V2 | | |
| L5 | —— | -57,29 | 3,700 | | 1,743412 | 32,04 |
| L6 | | 53,86 | 10,087 | | 1,62286 | 60,06 |
| | LG3 | -35,27 | 0,100 | | | |
| L7 | —— | 68,71 | 2,932 | | 1,74791 | 44,57 |
| | —— | 880,29 | | V3 | | |
| Blende | —— | Ø variabel | | | | |
| | —— | | | V4 | | |
| L8 | | -10798,48 | 3,500 | | 1,791799 | 25,88 |
| L9 | LG4 | -21,17 | 2,000 | | 1,754529 | 35,09 |
| | —— | 49,08 | | V5 | | |
| L10 | —— | 43,38 | 2,300 | | 1,754529 | 35,09 |
| L11 | LG5 | 19,40 | 3,810 | | 1,594461 | 68,02 |
| | —— | -49,24 | | 53,631 | | |
| Bild | | | | | | |

Tabelle 2

| V \ ß | -0,125 | -0,173 | -0,240 | -0,333 | -0,460 | -0,641 | -0,924 | -1,133 | -1,875 |
|---|---|---|---|---|---|---|---|---|---|
| v1 | 133,478 | 167,286 | 176,037 | 169,605 | 153,145 | 129,674 | 93,492 | 69,204 | 7,291 |
| v2 | 87,746 | 47,783 | 25,875 | 13,122 | 6,134 | 3,195 | 5, 112 | 8,994 | 28,746 |
| v3 | 2,000 | 2,840 | 8,367 | 18,507 | 29,257 | 35,327 | 50,890 | 66,411 | 77,195 |
| v4 | 2,000 | 19,386 | 34,659 | 48,935 | 66,391 | 92,836 | 115,176 | 120,062 | 151,438 |
| v5 | 41,347 | 29,276 | 21,633 | 16, 401 | 11,643 | 5,539 | 1,900 | 1,900 | 1,900 |
| Ø Blende | 5.14 | 6,27 | 7,26 | 8,19 | 9,30 | 11,04 | 12,49 | 12,78 | 14,58 |

**Bezugszeichenliste**

O                Objektebene

L1 bis L11      Linsen

LG1 bis LG5    Linsengruppen

B                Bildebene

V1 bis V5      variable Abstände

**Patentansprüche**

1. Beidseitig telezentrisches Vergrößerungssystem, bestehend aus einem objektseitigen und einem bildseitigen Teilsystem,

   - das objektseitige Teilsystem umfassend drei Linsengruppen (LG1, LG2, LG3), und das bildseitige Teilsystem umfassend zwei Linsengruppen (LG4, LG5), in denen jeweils mindestens eine Linsengruppe entlang der optischen Achse verschiebbar ist, während die Übertragungslänge von der Objektebene bis zur Bildebene konstant bleibt,

- **dadurch gekennzeichnet, daß** der bildseitige Brennpunkt des objektseitigen Teilsystems mit dem objektseitigen Brennpunkt des bildseitigen Teilsystems zusammenfällt und dieser Brennpunkt für alle Vergrößerungen im gleichen Luftraum zwischen zwei Linsengruppen liegt,
- objektseitig beginnend die erste Linsengruppe (LG1) und die fünfte Linsengruppe (LG5) fest im Strahlengang positioniert sind, während die dazwischen liegenden Linsengruppen (LG2, LG3, LG4) beweglich sind, und
- mit einer Brechkraftverteilung + - + x - + der festen Linsengruppen (LG1, LG5) und der beweglichen Linsengruppen (LG2, LG3, LG4) und x der Position einer Blende zwischen den Linsengruppen,
- wobei die Blende am Ort des bildseitigen Brennpunkts des objektseitigen Teilsystems angeordnet ist und die beweglichen Linsengruppen (LG2, LG3, LG4) entsprechend der Steuerkurven .

$$\beta' = \frac{t_1 t_2 - f_2^2}{t_4} \frac{f_4 f_5}{f_1 f_2 f_3} \quad \text{und} \quad t_3 = \frac{f_3^2 t_1}{t_1 t_2 - f_2^2} + \frac{f_4^2}{t_4}$$

verschiebbar sind, wobei $f_i$ (i=1,...,5) die Brennweite der Linsengruppen, $t_i$ die Brennpunktabstände der Linsengruppen und $\beta'$ den Abbildungsmaßstab des beidseitig telezentrischen Systems bezeichnet.

2. Beidseitig telezentrisches Vergrößerungssystem nach Anspruch 1, bei dem der Durchmesser der Blendenöffnung variabel ist.

3. Beidseitig telezentrisches Vergrößerungssystem nach Anspruch 2, bei dem die Änderung des Durchmessers der Blendenöffnung in Abhängigkeit von der Änderung der Vergrößerung vorgesehen ist.

4. Beidseitig telezentrisches Vergrößerungssystem nach einem der vorgenannten Ansprüche, ausgeführt mit

   - einer Übertragungslänge in einem Bereich von 250 mm bis 600 mm, und
   - einer Vergrößerung in einem Bereich zwischen dem -0,125-fachen und dem -1,875-fachen.

5. Beidseitig telezentrisches Vergrößerungssystem nach Anspruch 4, ausgeführt mit

   - einer Übertragungslänge von 400 mm, und
   - variabler Vergrößerung über den gesamten Bereich vom -0,125fachen bis zum -1,875fachen hinweg.

6. Beidseitig telezentrisches Vergrößerungssystem nach einem der vorgenannten Ansprüche mit folgenden Konstruktionsdaten:

| Bezeichnung | Linsengruppen | Radien r | Dicken d | Abstand a | Brechzahl $n_e$ | Abbezahl $v_e$ |
|---|---|---|---|---|---|---|
| Objekt | | | | | | |
| | | —— | | 26,369 | | |
| L1 | | 93,85 | 12,000 | | 1,80832 | 46,24 |
| L2 | LG1 | -127,26 | 7,000 | | 1,812659 | 25,15 |
| | | —— | 202,36 | | | |
| | | —— | | V1 | | |
| L3 | | -63,33 | 2,500 | | 1,48914 | 70,18 |
| L4 | LG2 | 114,37 | 3,500 | | 1,743412 | 32,04 |
| | | —— | 237,09 | | | |
| | | | | V2 | | |
| L5 | | —— | -57,29 | 3,700 | | 1,743412 | 32,04 |
| L6 | | 53,86 | 10,087 | | 1,62286 | 60,06 |
| | LG3 | -35,27 | 0,100 | | | |
| L7 | | 68,71 | 2,932 | | 1,74791 | 44,57 |

(fortgesetzt)

| Bezeichnung | Linsengruppen | Radien r | Dicken d | Abstand a | Brechzahl $n_e$ | Abbezahl $v_e$ |
|---|---|---|---|---|---|---|
| | —— | 880,29 | | | | |
| | —— | | | V3 | | |
| Blende | —— | Ø variabel | | | | |
| | —— | | | V4 | | |
| L8 | —— | -10798; 48 | 3,500 | | 1,791799 | 25,88 |
| L9 | LG4 | -21,17 | 2,000 | | 1,754529 | 35,09 |
| | —— | 49,08 | | | | |
| | —— | | | V5 | | |
| L10 | | 43,38 | 2,300 | | 1,754529 | 35,09 |
| L11 | LG5 | 19,40 | 3,810 | | 1,594461 | 68,02 |
| | —— | -49,24 | | 53,631 | | |
| Bild | | | | | | |

**7.** Beidseitig telezentrisches Vergrößerungssystem nach Anspruch 5 mit ausgewählten Vergrößerungen β, diesen Vergrößerungen zugeordneten Durchmessern der Blendenöffnung sowie zugeordneten Abständen V1 bis V5 zwischen den Linsengruppen (LG1, LG2, LG3, LG4, LG5) nach folgender Tabelle:

| $v^\beta$ | -0,125 | -0,240 | -0,460 | -0,924 |
|---|---|---|---|---|
| V1 | 133,478 | 176,037 | 153,145 | 93,492 |
| V2 | 87,746 | 25,875 | 6,134 | 5, 112 |
| V3 | 2,000 | 8,367 | 29,257 | 50, 890 |
| V4 | 2,000 | 34,659 | 66,391 | 115, 176 |
| V5 | 41,347 | 21,633 | 11,643 | 1,900 |
| Ø Blende | 5, 14 | 7,26 | 9,30 | 12,49 |

**8.** Beidseitig telezentrisches Vergrößerungssystem mit fester, unveränderlicher Vergrößerung,

    - bestehend aus einem objektseitigen und einem bildseitigen optischen Teilsystem, wobei der bildseitige Brennpunkt des objektseitigen Teilsystems mit dem objektseitigen Brennpunkt des bildseitigen Teilsystems zusammenfällt,
    - ausgebildet mit sämtlichen Merkmalen nach einem der Ansprüche 1 bis 7, wobei die Abstände V1 bis V5 in Zuordnung zu einer fest vorgegebenen Vergrößerung als feste Abstände ausgeführt sind und wobei der Brennpunkt für alle ausgeführten Vergrößerungen im gleichen Luftraum zwischen zwei Linsengruppen liegt.

**9.** Verwendung des beidseitigen telezentrischen Vergrößerungssystems nach einem der vorgenannten Ansprüche

    - zur direkten Abbildung von Objekten, wobei die Telezentrie mit der Blende erzielt wird, oder
    - integriert in ein optisches Gerät in Kombination mit vor- und/oder nachgeordneten optischen Baugruppen, wobei die Telezentrie durch Strahlformung in diesen Baugruppen oder innerhalb des Vergrößerungssystems erzielbar ist.

**Claims**

**1.** A two-side telecentric magnification system, consisting of an object-side and an image-side subsystem,

    - with the object-side subsystem comprising three lens groups (LG1, LG2, LG3), and the image-side subsystem comprising two lens groups (LG4, LG5), in which at least one lens group is displaceable along the optical axis, whereas the distance between the object plane and the image plane remains constant,
    - **characterized in that** the image-side focus of the object-side subsystem is coincident with the object-side focus of the image-side subsystem, and that this focus is, for all magnifications, situated in the same air space between two lens groups, and that,
- starting on the object side, the first lens group (LG1) and the fifth lens group (LG5) have fixed positions in the ray path, whereas the lens groups (LG2, LG3, LG4) lying in between them are movable,
- with a distribution of refractive power of + - + x - + of the fixed lens groups (LG1, LG5) and the movable lens groups (LG2, LG3, LG4), and with x being the position of a diaphragm between the lens groups,
- with the diaphragm being arranged at the locus of the image-side focus of the object-side subsystem, and the movable lens groups (LG2, LG3, LG4) being displaceable in accordance with the control characteristics

$$\beta' = \frac{t_1 t_2 - f_2^2}{t_4} \frac{f_4 f_5}{f_1 f_2 f_3} \qquad \text{and} \qquad t_3 = \frac{f_3^2 t_1}{t_1 t_2 - f_2^2} + \frac{f_4^2}{t_4}$$

wherein $f_i$ (i=1,...,5) denotes the focal length of the lens groups, $t_i$ the distances of the foci of the lens groups, and $\beta'$ the lateral magnification of the two-side telecentric system t.

2. A two-side telecentric magnification system as claimed in Claim 1, in which the diameter of the diaphragm aperture is variable.

3. A two-side telecentric magnification system as claimed in Claim 2, in which the diameter of the diaphragm aperture is intended to be changed as a function of the change in magnification.

4. A two-side telecentric magnification system as claimed in any one of the preceding claims, implemented with

  - an object-to-image distance in a range of 250 mm to 600 mm, and
  - a magnification in a range between -0.125x and -1.875x.

5. A two-side telecentric magnification system as claimed in Claim 4, implemented with

  - an object-to-image distance of 400 mm, and
  - a magnification variable throughout the range from -0.125x to -1.875x.

6. A two-side telecentric magnification system as claimed in any one of the preceding claims, with the following design data:

| Designation | Lens groups | Radii r | Thicknesses d | Distance a | Refractive index $n_e$ | Abbe number $V_e$ |
|---|---|---|---|---|---|---|
| Object | _____ | | | 26.369 | | |
| L1 | | 93.85 | 12.000 | | 1.80832 | 46.24 |
| L2 | LG1 | -127.26 | 7.000 | | 1.812659 | 25.15 |
| | —— | 202.36 | | | | |
| | —— | | | V1 | | |
| L3 | | -63.33 | 2.500 | | 1.48914 | 70.18 |
| L4 | LG2 | 114.37 | 3.500 | | 1.743412 | 32.04 |
| | —— | 237.09 | | | | |
| | —— | | | V2 | | |
| L5 | | -57.29 | 3.700 | | 1.743412 | 32.04 |
| L6 | | 53.86 | 10.087 | | 1.62286 | 60.06 |
| | LG3 | -35.27 | 0.100 | | | |
| L7 | —— | 68.71 | 2.932 | | 1.74791 | 44.57 |
| | —— | 880.29 | | | | |
| | —— | | | V3 | | |
| Diaphra gm | —— | variable diameter | | V4 | | |

(continued)

| Designation | Lens groups | Radii r | Thicknesses d | Distance a | Refractive index $n_e$ | Abbe number $V_e$ |
|---|---|---|---|---|---|---|
| L8 | LG4 | 10798.48 | 3.500 | | 1.791799 | 25.88 |
| L9 | | -21.17 | 2.000 | | 1.754529 | 35.09 |
| | —— | 49.08 | | V5 | | |
| L10 | —— LG5 | 43.38 | 2.300 | | 1.754529 | 35.09 |
| L11 | —— | 19.40 | 3.810 | | 1.594461 | 68.02 |
| | | -49.24 | | 53.631 | | |
| Image | | | | | | |

**7.** A two-side telecentric magnification system as claimed in Claim 5, with selected magnifications β, diameters of the diaphragm apertures that are correlated to these magnifications, and correlated distances V1 to V5 between the lens groups (LG1, LG2, LG3, LG4, LG5) according to the following table:

| v $^β$ | -0.125 | -0.240 | -0.460 | -0.924 |
|---|---|---|---|---|
| V1 | 133.478 | 176.037 | 153.145 | 93.492 |
| V2 | 87.746 | 25.875 | 6.134 | 5.112 |
| V3 | 2.000 | 8.367 | 29.257 | 50.890 |
| V4 | 2.000 | 34.659 | 66.391 | 115.176 |
| V5 | 41.347 | 21.633 | 11.643 | 1.900 |
| Diaphragm diameter | 5.14 | 7.26 | 9.30 | 12.49 |

**8.** A two-side telecentric magnification system with fixed, invariable magnification,

- consisting of an object-side and an image-side optical subsystem, with the image-side focus of the object-side subsystem being coincident with the object-side focus of the image-side subsystem,
- implemented with all characteristics according to any one of Claims 1 to 7, with the distances V1 to V5 being implemented as fixed distances correlated to a specified fixed magnification and with the focus, for all magnifications, being situated in the same air space between two lens groups.

**9.** Use of the two-side telecentric magnification system as claimed in any one of the preceding claims, either

- for the direct imaging of objects, with telecentric conditions being achieved by means of the diaphragm, or
- integrated in an optical instrument in combination with optical components arranged upstream or downstream, with telecentric conditions being achievable by means of beam shaping in these components or within the magnification system.

**Revendications**

**1.** Système de grossissement bilatéralement télécentrique, composé d'une partie de système située côté objet et d'une partie de système située côté image,

- la partie de système située côté objet comportant trois groupes de lentilles (LG1, LG2, LG3) et la partie de système située côté image comportant deux groupes de lentilles (LG4, LG5), groupes parmi lesquels au moins un groupe de lentilles peut être déplacé le long de l'axe optique tandis que la longueur de transmission du plan de l'objet au plan de l'image reste constante,
- **caractérisé en ce que** le foyer situé côté image de la partie de système située côté objet coïncide avec le foyer situé côté objet de la partie de système située côté image et **en ce que** ce foyer repose, pour tous les grossissements, dans le même espace aérien, entre deux groupes de lentilles,
- **en ce que**, en commençant par le côté de l'objet, le premier groupe de lentilles (LG1) et le cinquième groupe de lentilles (LG5) sont positionnés de manière fixe dans la trajectoire du rayon tandis que les groupes de lentilles intermédiaires (LG2, LG3, LG4) sont mobiles et
- comportant une répartition de la force de réfraction + - + x - + des groupes de lentilles fixes (LG1, LG5) et des groupes de lentilles mobiles (LG2, LG3, LG4) et x de la position d'un diaphragme entre les groupes de lentilles,
- sachant que le diaphragme est disposé à l'emplacement du foyer situé côté image de la partie de système située côté objet et que les groupes de lentilles mobiles (LG2, LG3, LG4) sont déplaçables conformément aux courbes de commande :

$$\beta' = \frac{t_1 t_2 - f_2^2}{t_4} \frac{f_4 f_5}{f_1 f_2 f_3} \qquad \text{et} \qquad t_3 = \frac{f_3^2 t_1}{t_1 t_2 - f_2^2} + \frac{f_4^2}{t_4}$$

sachant que $f_i$ (i=1, ..., 5) représente la distance focale des groupes de lentilles, $t_i$ les intervalles de foyer des groupes de lentilles et $\beta'$ l'échelle de représentation du système bilatéralement télécentrique.

**2.** Système de grossissement bilatéralement télécentrique selon la revendication 1, dans lequel le diamètre de l'orifice du diaphragme est variable.

**3.** Système de grossissement bilatéralement télécentrique selon la revendication 2, dans lequel la modification du diamètre de l'orifice du diaphragme est prévue en fonction de la modification du grossissement.

**4.** Système de grossissement bilatéralement télécentrique selon l'une quelconque des revendications précitées, réalisé avec :

   - une longueur de transmission située dans une plage comprise entre 250 mm et 600 mm et
   - un grossissement situé dans une plage comprise entre -0,125 fois et -1,875 fois.

**5.** Système de grossissement bilatéralement télécentrique selon la revendication 4, réalisé avec :

   - une longueur de transmission de 400 mm et
   - un grossissement variable s'étendant sur toute la plage comprise entre -0,125 fois et -1,875 fois.

**6.** Système de grossissement bilatéralement télécentrique selon l'une quelconque des revendications précitées comportant les données de construction suivantes :

| Nom | Groupes de lentilles | Rayons r | Epaisseurs d | Distance a | Indice de réfraction $n_e$ | Coefficient d'Abbe $v_e$ |
|---|---|---|---|---|---|---|
| Objet | | | | | | |
| | —— | | | 26, 369 | | |
| L1 | | 93, 85 | 12,000 | | 1,80832 | 46,24 |
| L2 | LG1 | -127,26 | 7,000 | | 1,812659 | 25,15 |
| | —— | 202,36 | | | | |
| | —— | | | V1 | | |
| L3 | | -63, 33 | 2,500 | | 1,48914 | 70,18 |
| L4 | LG2 | 114,37 | 3,500 | | 1,743412 | 32,04 |
| | —— | 237,09 | | | | |
| | —— | | | V2 | | |
| L5 | | -57,29 | 3,700 | | 1,743412 | 32,04 |
| L6 | | 53,86 | 10,087 | | 1,62286 | 60,06 |
| | LG3 | -35,27 | 0,100 | | | |
| L7 | | 68,71 | 2,932 | | 1,74791 | 44,57 |
| | —— | 880,29 | | | | |
| | —— | | | V3 | | |
| Ø Diaphragme | —— | Ø variable | | | | |

(suite)

| Nom | Groupes de lentilles | Rayons r | Epaisseurs d | Distance a | Indice de réfraction $n_e$ | Coefficient d'Abbe $v_e$ |
|---|---|---|---|---|---|---|
| Objet | | | | | | |
| | | | | V4 | | |
| L8 | —— | -10798,48 | 3,500 | | 1,791799 | 25,88 |
| L9 | LG4 | -21,17 | 2,000 | | 1,754529 | 35,09 |
| | —— | 49,08 | | | | |
| | | | | V5 | | |
| L10 | —— | 43,38 | 2,300 | | 1,754529 | 35,09 |
| L11 | LG5 | 19,40 | 3,810 | | 1,594461 | 68,02 |
| | —— | -49,24 | | 53,631 | | |
| Image | | | | | | |

**7.** Système de grossissement bilatéralement télécentrique selon la revendication 5 comportant des grossissements sélectionnés β, des diamètres de l'orifice du diaphragme attribués à ces grossissements ainsi que des distances attribuées V1 à V5 entre les groupes de lentilles (LG1, LG2, LG3, LG4, LG5) selon le tableau suivant :

| $v^\beta$ | -0, 125 | -0,240 | -0,460 | -0,924 |
|---|---|---|---|---|
| V1 | 133,478 | 176,037 | 153,145 | 93,492 |
| V2 | 87,746 | 25,875 | 6,134 | 5,112 |
| V3 | 2,000 | 8,367 | 29,257 | 50,890 |
| V4 | 2,000 | 34,659 | 66,391 | 115,176 |
| V5 | 41,347 | 21,633 | 11,643 | 1,900 |
| Ø Diaphragme | 5,14 | 7,26 | 9,30 | 12,49 |

**8.** Système de grossissement bilatéralement télécentrique comportant un grossissement fixe, invariable,

- composé d'une partie de système optique située côté objet et d'une partie de système optique située côté image, le foyer situé côté image de la partie de système située côté objet coïncidant avec le foyer situé côté objet de la partie de système située côté image,
- réalisé avec toutes les caractéristiques selon l'une quelconque des revendications 1 à 7, sachant que les distances V1 à V5 sont réalisées en tant que distances fixes attribuées à un grossissement prédéfini de manière fixe et sachant que le foyer se trouve, pour tous les grossissements réalisés, dans le même espace aérien, entre deux groupes de lentilles.

**9.** Utilisation du système de grossissement bilatéralement télécentrique selon l'une quelconque des revendications précitées

- pour la représentation directe d'objets, la télécentrie étant obtenue à l'aide du diaphragme ou
- intégrée dans un appareil optique en association avec des modules optiques placés en amont et/ou en aval, la télécentrie pouvant être obtenue par la formation d'un rayon dans ces modules ou à l'intérieur du système de grossissement.

O  LG1  LG2  LG3  Blende  LG4  LG5  B

V1  V2  V3  V4  V5

EP 2 376 963 B1

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2005316143 B
- DE 3887578